# EUROPÄISCHE PATENTANMELDUNG

(11) **EP 1 897 892 A2**
(43) Veröffentlichungstag der Anmeldung: **12.03.2008**
(21) Anmeldenummer: 07017010.5
(22) Anmeldetag: 30.08.2007
(51) Int. Cl.: C08B 31/04

(54) **Verfahren zum mikropartikulären Beladen von hochpolymeren Kohlenhydraten mit hydrophoben Wirkflüssigkeiten**

(30) Priorität: 11.09.2006 DE 102006042586
(71) Anmelder: Betanie B.V. International Trading, 3012 KD Rotterdam (NL)
(72) Erfinder: Wimmer, Günter, 40667 Meerbusch (DE); Kindermann, Holger, Dr., 97941 Tauberbischofsheim (DE); Meuser, Friedrich, Prof. Dr. Dr.e.h., 13465 Berlin (DE)
(74) Vertreter: Goddar, Heinz J.

(57) **Zusammenfassung**

Verfahren zum mikropartikulären Beladen der Mikrokapillaren eines mindestens ein partikuläres hochpolymeres Kohlenhydrat und/oder dessen Derivat(e) aufweisenden Matrixmaterials mit mindestens einer hydrophoben Wirkflüssigkeit, dadurch gekennzeichnet, daß die Mikrokapillaren des Matrixmaterials in einem Konditionierungsschritt für die hydrophobe Flüssigkeit(en) leichtgängig gemacht werden; und daß anschließend in einem Beladeschritt das Matrixmaterial mit der hydrophoben Flüssigkeit innig vermengt wird.

## Beschreibung

Die Erfindung betrifft ein Verfahren zum mikropartikulären Beladen der Mikrokapillaren eines mindestens ein partikuläres hochpolymeres Kohlenhydrat und/oder dessen Derivat(e) aufweisenden Matrixmaterials mit mindestens einer hydrophoben Wirkflüssigkeit.

Es ist bekannt, daß partikuläre hochpolymere Kohlenhydrate, insbesondere Stärken, Wasserdampfsorptionsverhalten zeigen, das zu Teilen auf Kapillarporosität zurückzuführen ist. Die Kapillaren sind überwiegend von submikroskopischer Dimension (K.C. Huber, J.N. BeMiller, Carbohydrate Polymers 41 (2000), 269-276; K.C. Huber, J.N. BeMiller, Cereal Chem. 74 (5) 537-541, Gallant et al., Carbohydrate Polymers 32, 1997, 177-191) im Bereich von 50 bis 100 nm. Aufgrund dieser Dimension kann es in den Kapillaren oberhalb einer dafür kritischen Wasseraktivität zur Kondensation kommen. Obgleich die Trockenmasse der Stärke hydrophob ist, besitzt die Stärke durch die Wasserdampfsorption vor allem in den Kapillaren hydrophilen Charakter. Deshalb können Stärkekörner im Bereich eines Gleichgewichtswassergehalts von 8 bis 22 %, als Matrixmaterial verwendet, zwar oberflächlich mit Öl beladen werden, das Öl kann aber nur langsam in deren Kapillaren eindringen. Erst nach Trocknen der Stärke kann die durch den Wassergehalt gegebene Barriere für die Ölaufnahme leichter überwunden werden. Öl kann aber auch dann erst in die Kapillaren eindringen, wenn seine Viskosität und damit seine Oberflächenspannung in geeigneter Weise soweit herabgesetzt wird, daß es kapillargängig wird. Ebenso kann durch Anwendung von erhöhten Drücken die Penetration von Ölen in die Kapillaren verbessert werden. Die Herabsetzung der Viskosität kann durch Temperaturerhöhung und/oder Verdünnen des Öls in Lösemittel erreicht werden.

Die Nutzung der Kapillaren partikulärer, hochpolymerer Kohlenhydrate, wie Stärken, ist bei allen Derivatisierungen derselben für eine homogene Verteilung der Derivatisierung der Moleküle in den Partikeln von großem Interesse. Das Erreichen einer homogenen Verteilung, beispielsweise von hydrophoben Substanzen, ist dann schwierig, wenn die genannten Kohlenhydrate in Suspension derivatisiert werden sollen.

Es wird zum Beispiel von R.L. Shogren et al. (Starch/Stärke 52 (2000), 196-204) beschrieben, daß bei Verwendungen von OSA (Octenylsuccinanhydrid) als hydrophobe Flüssigkeit zur Derivatisierung von Stärken in wässriger Suspension (Slurry) die hydrophobe Flüssigkeit nur unzureichend in die Kapillaren der verwendeten Stärkekörner eindringt und zum weitaus größten Teil an deren Oberfläche verbleibt. Dagegen sind die Kapillaren hydrophilen Derivatisierungreagenzien zugänglich, so daß auch die dort vorliegenden Moleküle im Sinne einer homogenen Verteilung der Reaktanden derivatisiert werden.

Der Nachteil aller Derivatisierungen in Suspension besteht allerdings darin, daß sie verfahrenstechnisch aufwendig und damit kostenintensiv sind. Deshalb werden beispielsweise Stärkederivate, die ihre ursprüngliche Kornform bei der Derivatisierung behalten, auch im semitrocknen Zustand oberhalb ihrer Gleichgewichtsfeuchte hergestellt. Diese Verfahren sind gegenüber den ersteren weniger aufwendig, beschränken sich aber auf hydrophile Derivatisierungsreagenzien.

Beispielsweise wird in der WO 02/088188 beschrieben, daß vernetzende hydrophile Reaktanden, wie z. B. Trimetaphosphat oder Epichlorhydrin, bei einer Feuchte von 5 bis 20 Gewichtsprozent oberhalb des Gleichgewichtswassergehalts mit Stärken reagieren. Die über den Gleichgewichtswassergehalt hinaus notwendige Wassermenge dient dabei dem Transport der hydrophilen Reagenzien an die Kapillaren der Stärke, die bis zu 33 % kapillar gebundenes Wasser aufnehmen kann (Irene Schwier, Dissertation im Fachbereich Chemie der Universität Hamburg, 1983: Kernresonanzmessung, Sorptionsverhalten und Bewegungsmechanismus des Wassers an Stärke).

Der Erfindung liegt die Aufgabe zugrunde, ein Verfahren der gattungsgemäßen Art zu schaffen, bei dem die mikropartikuläre Verteilung der hydrophoben Wirkflüssigkeit bei der Strukturauflösung des Matrixmaterials in der dabei entstehenden kontinuierlichen, kohlenhydrathaltigen Phase erhalten bleibt.

Erfindungsgemäß wird diese Aufgabe dadurch gelöst, daß die Mikrokapillaren des Matrixmaterials in einem Konditionierungsschritt für die hydrophobe(n) Flüssigkeit(en) leichtgängig gemacht werden; und daß anschließend in einem Beladeschritt das Matrixmaterial mit der hydrophoben Flüssigkeit innig vermengt wird.

Es wird ferner vorgeschlagen, daß eine hydrophobe Wirkflüssigkeit verwendet wird, die mit dem hochpolymeren Kohlenhydrat und/oder dessen Derivaten kovalente Bindungen eingehen kann.

Nach der Erfindung kann auch vorgesehen sein, daß als Matrixmaterial mindestens eine Stärke oder ein Stärkederivat verwendet wird.

Dabei kann vorgesehen sein, daß als Matrixmaterial Kartoffelstärke und/oder ein Kartoffelstärkederivat verwendet wird/werden.

Eine weitere Ausführungsform der Erfindung sieht vor, daß als Matrixmaterial Kartoffelstärke und/oder ein Kartoffelstärkederivat im Gleichgewichtswassergehalt verwendet wird/werden.

Eine Weiterbildung der Erfindung schlägt dabei vor, daß das Matrixmaterial im Konditionierungsschritt auf einen Wassergehalt unterhalb des Gleichgewichtswassergehaltes getrocknet wird.

Ferner schlägt die Erfindung vor, daß das Matrixmaterial zur Vergrößerung der Partikeloberfläche und damit der Kapillargängigkeit im Konditionierungsschritt vorgemahlen wird.

Auch kann erfindungsgemäß so vorgegangen werden, daß das Matrixmaterial im Konditionierungsschritt in trockenem oder semitrockenem Zustand mit mindestens einer wässrigen Lösung eines sauren, basischen oder neutralen Salzes und/oder mit einer wässrigen Base oder Säure intensiv durchmischt wird.

Nach der Erfindung kann auch vorgesehen sein, daß das Durchmischen des Matrixmaterials mit der wässrigen Lösung eines sauren, basischen oder neutralen Salzes und/oder mit einer wässrigen Base oder Säure bei einer Temperatur von 60°C bis 80°C erfolgt.

Dabei kann vorgesehen sein, daß das Durchmischen des Matrixmaterials mit der wässrigen Lösung eines sauren, basischen oder neutralen Salzes und/oder mit einer wässrigen Base oder Säure bei einer Temperatur von etwa 70°C erfolgt.

Eine weitere Ausführungsform sieht vor, daß das Durchmischen des Matrixmaterials mit der wässrigen Lösung eines sauren, basischen oder neutralen Salzes und/oder mit einer wässrigen Base oder Säure über eine Zeit von 10 bis 60 Minuten erfolgt.

Die Erfindung sieht auch vor, dass ggf. das Durchmischen des Matrixmaterials mit der wässrigen Lösung eines sauren, basischen oder neutralen Salzes und/oder mit einer wässrigen Base oder Säure über eine Zeit von etwa 30 Minuten erfolgt.

Auch kann erfindungsgemäß so vorgegangen werden, daß das Matrixmaterial vor Beginn des Durchmischungsvorganges mit der vorzugsweise auf etwa 70°C vorgewärmten wässrigen Lösung eines sauren, basischen oder neutralen Salzes und/oder mit der wässrigen Base oder Säure besprüht wird.

Nach der Erfindung kann auch vorgesehen sein, daß das Besprühen für etwa 3 bis 10 Minuten durchgeführt wird.

Dabei kann vorgesehen sein, daß das Besprühen für eine Zeit von etwa 5 Minuten durchgeführt wird.

Eine andere Erfindung sieht vor, daß als wässrige Säure 1-Hydroxyethan-1,1-disphosphonsäure, Tetranatriumsalz in etwa 25%iger wässriger Lösung verwendet wird.

Auch kann erfindungsgemäß so vorgegangen werden, daß als wässrige Lösung eines sauren Salzes eine ca. 10 %ige wässrige Lösung von Zinkacetatdihydrat verwendet wird.

Ferner schlägt die Erfindung vor, daß in dem an den Konditionierungsschritt anschließenden Beladeschritt das konditionierte Matrixmaterial mit der Wirkflüssigkeit besprüht und anschließend innig durchmischt wird.

Nach der Erfindung kann auch vorgesehen sein, daß der Beladeschritt bei einer Temperatur von 30°C bis 80°C durchgeführt wird.

Dabei kann vorgesehen sein, daß der Beladeschritt bei einer Temperatur von etwa 70°C durchgeführt wird.

Eine andere Ausführungsform sieht vor, daß der Beladeschritt in 10 bis 60 Minuten durchgeführt wird.

Eine andere Erfindung sieht vor, daß der Beladeschritt in etwa 30 Minuten durchgeführt wird.

Auch kann erfindungsgemäß so vorgegangen werden, daß das konditionierte Matrixmaterial mit der vorzugsweise auf etwa 50°C vorgewärmten Wirkflüssigkeit besprüht wird.

Nach der Erfindung kann auch vorgesehen sein, daß das Besprühen für etwa 3 bis 10 Minuten durchgeführt wird.

Dabei kann vorgesehen sein, daß das Besprühen für eine Zeit von etwa 5 Minuten durchgeführt wird.

Ferner schlägt die Erfindung vor, daß als Wirkflüssigkeit eine hydrophobe Flüssigkeit mit einem Gehalt an Alkenylsuccinanhydrid verwendet wird.

Auch kann erfindungsgemäß so vorgegangen werden, daß eine Wirkflüssigkeit mit einem Gehalt an Propylencarbonat verwendet wird.

Eine andere Erfindung sieht vor, daß eine Wirkflüssigkeit mit einem Gehalt an Aceton verwendet wird.

Dabei kann vorgesehen sein, daß eine Wirkflüssigkeit mit einem Gehalt an einem hydrophoben Vitamin verwendet wird.

Schließlich schlägt die Erfindung auch vor, daß eine Wirkflüssigkeit mit einem Gehalt an Vitamin-A-Palmitat verwendet wird.

Durch die Erfindung gelingt es, die Aufnahmekapazität der Kapillaren partikulärer, hochpolymer Kohlenhydrate, wie Stärken, sowohl für Wasser bzw. hydrophile Flüssigkeiten als auch für hydrophobe Flüssigkeiten zugänglich zu machen. Dadurch können derartige hydrophobe Wirkflüssigkeiten mikropartikuliert werden. Hydrophobe Flüssigkeiten können nach der Erfindung in den Kapillaren von partikulären, hochpolymeren Kohlenhydraten, insbesondere Stärken, so gespeichert werden, daß sie mikropartikulär in der sie einschließenden Matrix der Kohlenhydrate vorliegen, aus der sie bei deren anschließender Strukturauflösung als Mikropartikel hervorgehen und dann in der aus der Matrix entstehenden kontinuierlichen Phase homogen verteilt sind. Die mikropartikulierte hydrophobe Wirkflüssigkeit bleibt bei der Strukturauflösung der Matrix durch thermische Verfahren, wie Aufkochen in Wasser oder Extrudieren, in der dabei entstehenden kontinuierlichen Phase aus Wasser und Kohlenhydrat oder Kohlenhydrat und Wasser mikropartikuliert verteilt und koalesziert nicht.

Durch die Erfindung wird also ein Verfahren zur mikropartikulären Beladung von mikrokapillaren, hochpolymeren Kohlenhydraten und deren Derivaten, insbesondere Stärken, im trok-kenen und semitrockenen Zustand nach einem speziellen Temperatur-Zeit-Regime mit hydrophoben Flüssigkeiten, insbesondere Ölen, geschaffen. Die Herstellung der beladenden Kohlenhydrate erfolgt dabei vorzugsweise zu dem Zweck, mit Ölen und gegebenenfalls anderen Zusatzstoffen, wie Vitaminen und/oder Spurenelementen, angereicherte Mikropartikel zu erhalten, die sich zum Einsatz derselben in wässrigen Systemen zur effizienten Verteilung der Öle und gegebenenfalls der anderen Zusatzstoffe in diesen eignen. Vorteilhafterweise erfolgt die Verteilung nach Strukturauflösung der Mikropartikel unter Bildung einer kontinierlichen Phase, in der Öl dann in Form von Mikrotropfen homogen verteilt vorliegt.

Beim erfindungsgemäßen Verfahren wird die Stärke vorzugsweise zunächst im trockenen oder semitrockenen Zustand mit wässrigen Lösungen eines sauren, basischen oder neutralen Salzes und/oder mit wässrigen Säuren oder Basen unter Temperatureinwirkung und intensivem Mischen konditioniert, wobei die Konditionierung alternativ auch dadurch erfolgen kann, daß das Matrixmaterial bzw. die Stärke auf einen Wassergehalt unterhalb des Gleichgewichtswassergehaltes getrocknet und/oder zur Erhöhung der Kapillargängigkeit vorgemahlen wird. Das konditionierte Matrixmaterial, vorzugsweise also Stärke, wird dann unter Temperatureinwirkung und intensivem Mischen mit hydrophoben Flüssigkeiten versetzt. Die Kapillargängigkeit der hydrophoben Flüssigkeit läßt sich durch Einstellen der Temperatur und/oder des Druckes im Konditionierungs- und/oder Beladeschritt und/oder durch Vermischen mit Lösemitteln erhöhen.

Der Erfindung liegt die überraschende Erkenntnis zugrunde, daß es gelingt, die Kapillaren von insbesondere Stärkekörnern hydrophoben Flüssigkeiten, insbesondere Ölen, so zugänglich zu machen, daß diese darin mikropartikulär verteilt sind und beim Auflösen der Stärkmatrix nicht koaleszieren.

Besonderes bevorzugt ist eine Ausführungsform der Erfindung, bei der native Kartoffelstärke im Gleichgewichtswassergehalt zunächst in einer wässrigen Lösung eines basischen Salzes durch Mischen und Temperatureinwirkung konditioniert und die konditionierte Stärke anschließend mit einem Alkenylsuccinanhydrid versetzt wird, welches zuvor durch Erwärmen auf eine kapillargängige Viskosität herabgesetzt wurde, woraufhin man dann das Gemisch unter weiterem intensivem Mischen reagieren läßt.

Eine weitere bevorzugte Ausführungsform der Erfindung sieht vor, native Kartoffelstärke im Gleichgewichtswassergehalt mit einem Zinksalz, gegebenenfalls in Mischung mit anderen Salzen, zu konditionieren und die so konditionierte Stärke anschließend mit einem Alkenylsuccinanhydrid zu versetzen, welches zuvor durch Erwärmen auf die kapillargängige Viskosität herabgesetzt wurde, und das Gemisch unter weiterem intensiven Mischen reagieren zu lassen.

Ein weitere Ausführungsform der Erfindung sieht vor, native Kartoffelstärke im Gleichgewichtswassergehalt zuerst mit einer wässrigen Lösung eines basischen Salzes durch Mischen und Temperatureinwirkung zu konditionieren und es anschließend mit einem mit Vitamin-A-Palmitat angereicherten Alkenylsuccinanhydrid zu versetzen, welches zuvor durch Erwärmen auf eine kapillargängige Viskosität herabgesetzt wurde, und das Gemisch unter weiterem intensiven Mischen reagieren zu lassen.

Die Erfindung schlägt auch vor, gegebenenfalls native Kartoffelstärke im Gleichgewichtswassergehalt zuerst mit einer wässrigen Lösung eines Zinksalzes, gegebenenfalls in Mischung mit anderen Salzen, durch Mischen und Temperatureinwirkung zu konditionieren und die so konditionierte Stärke anschließend mit einem Vitamin-A-Palimitat angereicherten Alkenylsuccinanhydrid zu versetzen, welches zuvor durch Erwärmen auf eine kapillargängige Viskosität herabgesetzt wurde, und das Gemisch unter weiterem intensiven Mischen reagieren zu lassen.

Weitere bevorzugte Ausführungsformen beziehen sich auf das Konditionieren der Stärke anstatt mit wässrigen Lösungen eines sauren, basischen oder neutralen Salzes und/oder mit einer wässrigen Base oder Säure durch Trocknen auf einen Wassergehalt unterhalb des Gleichgewichtswassergehalts, vorzugsweise auf 4 bis 5 % Restwassergehalt, bzw. durch Vormahlung zur Vergrößerung der Oberfläche der Stärke, um die Kapillargängigkeit zu erhöhen.

Öle oder hydrophobe Wirkflüssigkeiten können tierische Fette und pflanzliche Öle und Wachse wie gesättigte und ungesättigte Fettsäure-ester bzw. -glyceride bzw.-phosphatide und deren Derivate, Glyco- und Aminolipide, ätherische Öle wie Terpene bzw. Polyterpene, Vitaminöle, Stereo-bzw. Alkaloide, etc., langkettige (C8-C22) Alkyl--, Alkenyl- bzw. Alkinyldicarbonsäuren, sowie deren Ester, Halbester und Anhydride, öllöslich modifizierte Phenol-, Melamin- oder Harnstoffharze, Kolophoniumharze und deren Derivate z.B. Ester, Ketonharze, wie z.B. Ketendimere, Cyclohexanolharze, Polyamid-, Polyamidoamidharze, verkappte Isocyanat-Polyolharze, epoxydierte Öle oder liquide Epoxyharze oder Mischungen daraus sein.

Als Lösevermittler können ein- oder mehrwertige Alkohole wie z.B. Ethanol, Cyclohexanol, Xylol oder Glycerin etc., Glykole wie z.B. Ethylen-Propylen oder Butylenglykole, deren Ether wie z.B. Dipropylenglykolether, Polyethylen-Polypropylenglykol etc., Ester wie z.B. Ethylacetat etc., Alkylencarbonate, wie z.B. Ethylen-, Propylen- oder Butylencarbonat, Ketone, wie z.B. Aceton, Methylethylketon, Dioxan etc. und stickstoffhaltige Lösevermittler wie z.B. N-Methyl-2-Pyrrolidon etc. bzw. Mischungen daraus dienen.

Wässrige Lösungen eines sauren, basischen oder neutralen Salzes und/oder wässrige Säuren oder Basen können Salze von Spurenelementen, Na/K/NH₄-Phophonate oder -Phosphate, Na/K/NH₄-Sulfonate oder Sulfate, sowie freie Basen (Li/Na/K/NH₄OH), EDTA, sowie stickstoffhaltige Basen wie z.B. Ammoniak, Triethylamin etc. bzw. Mischungen daraus oder phosphor bzw. schwefelhaltige Säuren bzw. deren organische Abkömmlinge, wie z.B. Sulfon oder Phosphonsäuren bzw. Mischungen daraus sein.

Weitere Merkmale und Vorteile der Erfindung ergeben sich aus der nachstehenden Beschreibung, in der Ausführungsbeispiele im einzelnen erläutert sind.

### Beispiel 1:

Zur Mikropartikulierung von Alkenylsuccinanhydrid mittels Kartoffelstärke werden 40 kg Kartoffelstärke mit einem Wassergehalt von 19,1 % und einem pH-Wert von 6,7 in einem beheizten Pflugscharmischer (Lödige: Typ FM 130, 160 U/min) auf 70°C vortemperiert und dann mit 1,280 kg HEDP/Na (1-Hydroxyethan-1,1-diphosphonsäure, Tetranatriumsalz, 25 %ig), das auf 70°C vorgewärmt ist, innerhalb von 5 min mit Hilfe eines Rotationssprühkopfs versetzt. Danach erfolgt die Konditionierung durch Mischen über 30 min (80 U/min) bei einer fortlaufenden Temperierung des Mischguts auf 70°C. Danach werden eine auf 50°C vorgewärmte Mischung aus 800 g OSA (Octenylsuccinanhydrid), 240 g PC (Propylencarbonat) und 32 g Aceton der konditionierten Stärke innerhalb von 5 min (bei 160 U/min) wiederum mit dem Rotationssprühkopf zugegeben. Das Mischgut wird danach weitere 30 min bei 70°C gemischt (80 U/min). Danach wird das entstandene Produkt kommissioniert.

### Beispiel 2:

Zur Mikropartikulierung eines Zinksalzes mittels Kartoffelstärke werden 40 kg Kartoffelstärke mit einem Wassergehalt von 19,1 % und einem pH-Wert von 6,7 in einem beheizten Pflugscharmischer (Lödige: Typ FM 130, 160 U/min) auf 70°C vortemperiert und dann mit 2,0 kg einer 10 % igen wässrigen Lösung von Zinkacetatdihydrat, das auf 70°C vorgewärmt ist, innerhalb von 5 min mit Hilfe eines Rotationssprühkopfs versetzt. Danach erfolgt die Konditionierung durch Mischen über 30 min (80 U/min) bei einer fortlaufenden Temperierung des Mischguts auf 70°C. Danach werden eine auf 50°C vorgewärmte Mischung aus 800 g OSA (Octenylsuccinanhydrid), 240 g PC (Propylencarbonat) und 32 g Aceton der konditionierten Stärke innerhalb von 5 min (bei 160 U/min) wiederum mit dem Rotationssprühkopf zugegeben. Das Mischgut wird danach weitere 30 min bei 70°C gemischt (80 U/min). Danach wird das entstandene Produkt kommissioniert.

### Beispiel 3:

Zur Mikropartikulierung von Vitamin-A-Palmitat mittels Kartoffelstärke werden 40 kg Kartoffelstärke mit einem Wassergehalt von 19,1 % und einem pH-Wert von 6,7 in einem beheizten Pflugscharmischer (Lödige: Typ FM 130,160 U/min) auf 70°C vortemperiert und dann mit 1,92 kg HEDP/Na (1-Hydroxyethan-1,1-diphosphonsäure, Tetranatriumsalz, 25 %ig), das auf 70°C vorgewärmt ist, innerhalb von 5 min mit Hilfe eines Rotationssprühkopfs versetzt. Danach erfolgt die Konditionierung durch Mischen über 30 min (80 U/min) bei einer fortlaufenden Temperierung des Mischguts auf 70°C. Danach werden eine auf 50°C vorgewärmte Mischung aus 1200 g OSA (Octenylsuccinanhydrid), 36 g Vitamin A-Palmitat, 360 g PC (Propylencarbonat) und 48 g Aceton der konditionierten Stärke innerhalb von 5 min (bei 160 U/min) wiederum mit dem Rotationssprühkopf zugegeben. Das Mischgut wird danach weitere 30 min bei 70°C gemischt (80 U/min). Danach wird das entstandene Produkt kommissioniert.

Bezogen auf Stärke, werden vorzugsweise 1,0 bis 20%, in weiterer Verbesserung, ggf. etwa 3,0%, hydrophobe Wirkflüssigkeit eingesetzt. Der bevorzugte Einsatzbereich des Lösevermittlers beträgt, bezogen auf die hydrophobe Wirkflüssigkeit, 10 bis 50%, in weiterer Verbesserung etwa 30%. Das Konditionierungsmittel wird vorzugsweise in einem Bereich von 0,1 bis 5,0%, in weiterer Verbesserung 0,8%, bezogen auf Stärke eingesetzt. Sämtliche vorstehenden Angaben stellen Gewichts-Prozente dar und beziehen sich auf die Trockensubstanz.

Eine nach dem erfindungsgemäßen Verfahren mit Alkenylsuccinat beladene Stärke kann zur Bindung und Leimung von Papier, Karton, textilen- und mineralischen Faservliesen und Fasermatten, die optional Füllstoffe und Additive enthalten können, eingesetzt werden. Zur Fixierung werden übliche kationische Retentions- und Flockungsmittel benötigt, wobei 2-, 3-, 4-wertige Metallionen synergistisch die Bindungs- und Leimungswirkung verstärken, z. B. Ca-Al-, Fe-, Ti-, Zr-Ionen, um einige zu nennen.

Das gespeicherte Alkenylsuccinat wird aufgrund seiner Verteilung in der Stärkematrix optimal von den kationischen Additiven im Faserstoff reteniert. Da das Alkenylsuccinat durch hydrophobe Wechselwirkung an der Stärke verbleibt, bleibt deren Schutzkolloidfunktion erhalten, so daß sich keine verklebenden Aggregate von ASA-Metallsalzen, die zu produktionsstörenden Ablagerungen führen, bilden.

Eine nach dem erfindungsgemäßen Verfahren mit Alkenylsuccinat beladene Stärke kann auch als Oberflächenleimungsund Präparierungs- mittel eingesetzt werden, wobei je nach gewünschtem Feststoffgehalt und Viskosität die ASA-Stärke, wenn nötig z. B. mittels enzymatischem Abbau, auf diese Parameter eingestellt werden kann.

Durch Walzenkoch- oder Extruderkochbehandlung kann eine nach dem erfindungsgemäßen Verfahren mit Alkenylsuccinat beladene Stärke kaltwasserlöslich gemacht werden. Dadurch wird es möglich, das kaltwasserlösliche Produkt als Dispergier- und Co-Bindemittel in Beschichtungsmassen problemlos einzusetzen.

Eine nach dem erfindungsgemäßen Verfahren mit Alkenylsuccinat beladene Stärke kann nach Einstellen der Kaltwasserlöslichkeit aufgrund ihrer Stabilität und ihres Verdickungsvermögens als kaltwasserlösliches Additiv für Erdölbohrungen verwendet werden.

Eine nach dem erfindungsgemäßen Verfahren mit Alkenylsuccinat beladene Stärke, welche gegebenfalls zusätzlich mit Vitaminölen und Spurenelementen versetzt ist, kann in Lebensmitteln, z.B. Backwaren, als Emulgator und zur Anreicherung mit Mikronährstoffen eingesetzt werden.

Die in der vorstehenden Beschreibung und in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zum mikropartikulären Beladen der Mikrokapillaren eines mindestens ein partikuläres hochpolymeres Kohlenhydrat und/oder dessen Derivat(e) aufweisenden Matrixmaterials mit mindestens einer hydrophoben Wirkflüssigkeit, **dadurch gekennzeichnet, daß** die Mikrokapillaren des Matrixmaterials in einem Konditionierungsschritt für die hydrophobe(n) Flüssigkeit(en) leichtgängig gemacht werden; und daß anschließend in einem Beladeschritt das Matrixmaterial mit der hydrophoben Flüssigkeit innig vermengt wird.

2. Verfahren nach Anspruch 1, **dadurch gekennzeichnet, dass** eine hydrophobe Wirkflüssigkeit verwendet wird, die mit dem hochpolymeren Kohlenhydrat und/oder dessen Derivaten kovalente Bindungen eingehen kann.

3. Verfahren nach Anspruch 1 oder 2, **dadurch gekennzeichnet, daß** als Matrixmaterial mindestens eine Stärke oder ein Stärkederivat verwendet wird.

4. Verfahren nach Anspruch 3, **dadurch gekennzeichnet, daß** als Matrixmaterial Kartoffelstärke und/oder ein Kartoffelstärkederivat verwendet wird/werden.

5. Verfahren nach Anspruch 4, **dadurch gekennzeichnet, daß** als Matrixmaterial Kartoffelstärke und/oder ein Kartoffelstärkederivat im Gleichgewichtswassergehalt verwendet wird/werden.

6. Verfahren nach einem der vorangehenden Ansprüche, **dadurch gekennzeichnet, daß** das Matrixmaterial im Konditionierungsschritt auf einen Wassergehalt unterhalb des Gleichgewichtswassergehaltes getrocknet wird.

7. Verfahren nach einem der vorangehenden Ansprüche, **dadurch gekennzeichnet, daß** das Matrixmaterial zur Vergrößerung der Partikeloberfläche und damit der Kapillargängigkeit im Konditionierungsschritt vorgemahlen wird.

8. Verfahren nach einem der vorangehenden Ansprüche, **dadurch gekennzeichnet, daß** das Matrixmaterial im Konditionierungsschritt in trockenem oder semitrockenem Zustand mit mindestens einer wässrigen Lösung eines sauren, basischen oder neutralen Salzes und/oder mit einer wässrigen Base oder Säure intensiv durchmischt wird.

9. Verfahren nach Anspruch 8, **dadurch gekennzeichnet, daß** das Durchmischen des Matrixmaterials mit der wässrigen Lösung eines sauren, basischen oder neutralen Salzes und/oder mit der wässrigen Base oder Säure bei einer Temperatur von 30°C bis 80°C erfolgt.

10. Verfahren nach Anspruch 9, **dadurch gekennzeichnet, daß** das Durchmischen des Matrixmaterials mit der wässrigen Lösung eines sauren, basischen oder neutralen Salzes und/oder mit der wässrigen Base oder Säure bei einer Temperatur von etwa 70°C erfolgt.

11. Verfahren nach einem der Ansprüche 8 bis 10, **dadurch gekennzeichnet, daß** das Durchmischen des Matrixmaterials mit der wässrigen Lösung eines sauren, basischen oder neutralen Salzes und/oder mit der wässrigen Base oder Säure über eine Zeit von 10 bis 60 Minuten erfolgt.

12. Verfahren nach Anspruch 11, **dadurch gekennzeichnet, daß** das Durchmischen des Matrixmaterials mit der wässrigen Lösung eines sauren, basischen oder neutralen Salzes und/oder mit der wässrigen Base oder Säure über eine Zeit von etwa 30 Minuten erfolgt.

13. Verfahren nach einem der Ansprüche 8 bis 12, **dadurch gekennzeichnet, daß** das Matrixmaterial vor Beginn des Durchmischungsvorganges mit der vorzugsweise auf etwa 70°C vorgewärmten wässrigen Lösung eines sauren, basischen oder neutralen Salzes und/oder mit der wässrigen Base oder Säure besprüht wird.

14. Verfahren nach Anspruch 13, **dadurch gekennzeichnet, daß** das Besprühen für etwa 3 bis 10 Minuten durchgeführt wird.

15. Verfahren nach Anspruch 14, **dadurch gekennzeichnet, daß** das Besprühen für eine Zeit von etwa 5 Minuten durchgeführt wird.

16. Verfahren nach einem der Ansprüche 8 bis 15, **dadurch gekennzeichnet, daß** als wässrige Säure 1-Hydroxyethan-1,1-disphosphonsäure, Tetranatriumsalz in vorzugsweise etwa 25 %iger wässriger Lösung verwendet wird.

17. Verfahren nach einem der Ansprüche 8 bis 16, **dadurch gekennzeichnet, daß** als wässrige Lösung eines sauren Salzes eine ca. 10 %ige wässrige Lösung von Zinkacetatdihydrat verwendet wird.

18. Verfahren nach einem der vorangehenden Ansprüche, **dadurch gekennzeichnet, daß** in dem an den Konditionierungsschritt anschließenden Beladeschritt das konditionierte Matrixmaterial mit der Wirkflüssigkeit besprüht und anschließend innig durchmischt wird.

19. Verfahren nach Anspruch 18, **dadurch gekennzeichnet, daß** der Beladeschritt bei einer Temperatur von 30°C bis 80°C durchgeführt wird.

20. Verfahren nach Anspruch 19, **dadurch gekennzeichnet, daß** der Beladeschritt bei einer Temperatur von etwa 70°C durchgeführt wird.

21. Verfahren nach einem der Ansprüche 18 bis 20, **dadurch gekennzeichnet, daß** der Beladeschritt in 10 bis 60 Minuten durchgeführt wird.

22. Verfahren nach Anspruch 21, **dadurch gekennzeichnet, daß** der Beladeschritt in etwa 30 Minuten durchgeführt wird.

23. Verfahren nach einem der Ansprüche 18 bis 22, **dadurch gekennzeichnet, daß** das konditionierte Matrixmaterial mit der vorzugsweise auf etwa 50°C vorgewärmten Wirkflüssigkeit besprüht wird.

24. Verfahren nach Anspruch 23, **dadurch gekennzeichnet, daß** das Besprühen für etwa 3 bis 10 Minuten durchgeführt wird.

25. Verfahren nach Anspruch 24, **dadurch gekennzeichnet, daß** das Besprühen für etwa 5 Minuten durchgeführt wird.

26. Verfahren nach einem der vorangehenden Ansprüche, **dadurch gekennzeichnet, daß** als Wirkflüssigkeit eine hydrophobe Flüssigkeit mit einem Gehalt an Alkenylsuccinanhydrid verwendet wird.

27. Verfahren nach einem der vorangehenden Ansprüche, **dadurch gekennzeichnet, daß** eine Wirkflüssigkeit mit einem Gehalt an Propylencarbonat verwendet wird.

28. Verfahren nach einem der vorangehenden Ansprüche, **dadurch gekennzeichnet, daß** eine Wirkflüssigkeit mit einem Gehalt an Aceton verwendet wird.

29. Verfahren nach einem der vorangehenden Ansprüche, **dadurch gekennzeichnet, daß** eine Wirkflüssigkeit mit einem Gehalt an einem hydrophoben Vitamin verwendet wird.

30. Verfahren nach Anspruch 29, **dadurch gekennzeichnet, daß** eine Wirkflüssigkeit mit einem Gehalt an Vitamin-A-Palmitat verwendet wird.
